# DEMANDE DE BREVET EUROPEEN

(11) **EP 2 238 818 A1**
(43) Date de publication de la demande: **13.10.2010**
(21) Numéro de dépôt: 10159287.1
(22) Date de dépôt: 08.04.2010
(51) Int. Cl.: A01B 3/42, A01B 3/46

(54) **Charrue réversible**

(30) Priorité: 08.04.2009 FR 0952293
(71) Demandeur: Kuhn-Huard S.A., 44142 Châteaubriant (FR)
(72) Inventeur: Guermont, Jean-François, 44590, Sion Les Mines (FR); Herault, Vincent, 44470, Mauves Sur Loire (FR)
(74) Mandataire: Andres, Jean-Claude

(57) **Abrégé**

La présente invention se rapporte à une charrue (1) réversible comportant une structure d'attelage (2), une structure porteuse (4) et un organe de manoeuvre (5) permettant de déplacer ladite structure porteuse (4) par rapport à ladite structure d'attelage (2) autour d'une articulation cylindrique (6) de manière à amener ladite charrue (1) d'une position de travail dans une autre position de travail, chacune des positions de travail étant limitée par une butée d'aplomb (8) respective, l'organe de manoeuvre (5) étant alimenté par une centrale hydraulique (16).

La charrue est remarquable en ce qu'elle présente un dispositif (31) pour réduire la pression dans ledit organe de manoeuvre (5) sans limiter la pression entre ladite centrale hydraulique (16) et ledit dispositif (31).

## Description

La présente invention se rapporte au domaine technique général du machinisme agricole et plus spécialement à une charrue réversible comportant une structure d'attelage, une structure porteuse et un organe de manoeuvre permettant de déplacer ladite structure porteuse par rapport à ladite structure d'attelage autour d'une articulation cylindrique de manière à amener ladite charrue d'une position de travail dans une autre position de travail, chacune des positions de travail étant limitée par une butée d'aplomb respective.

Sur des charrues connues, la structure porteuse comporte une partie avant liée à la structure d'attelage au moyen d'une articulation cylindrique d'axe longitudinal sensiblement parallèle à la direction d'avance et une partie arrière supportant des corps de labour. Pour le retournement, la structure porteuse pivote d'environ 180° autour de l'axe longitudinal via un vérin de retournement. Ce vérin hydraulique est du type à double effet et comporte une grande chambre et une petite chambre. Le vérin est relié d'une part à ladite structure d'attelage au moyen d'une articulation supérieure et d'autre part à ladite structure porteuse au moyen d'une articulation inférieure.

Au cours de la manoeuvre de retournement, la tige du vérin effectue un aller-retour. C'est-à-dire que depuis une position de départ tige sortie, la tige se rétracte dans le vérin sous la commande du circuit hydraulique puis le vérin s'étend pour amener la charrue dans son autre position de travail. Pour cela le circuit est alimenté en fluide via la centrale hydraulique du tracteur. L'opérateur maintient son action sur le distributeur commandant la centrale hydraulique tout au long de l'opération de retournement. Une butée respective limite le pivotement de la structure porteuse par rapport à la structure d'attelage. Ces butées permettent le réglage d'aplomb de la charrue, c'est-à-dire le réglage de la perpendicularité du plan des étançons par rapport à la surface du sol. Chaque corps de charrue étant fixé sur un age par un étançon. Chacune des positions de travail est limitée par l'intermédiaire d'une butée d'aplomb réglable correspondante. Il s'agit d'une butée réglable à vis. Les butées sont placées sur la structure d'attelage de manière à ce que la tige du vérin prenne alternativement appui sur l'une d'entre elles.

Lorsque la structure porteuse arrive dans sa position de travail après le retournement, le vérin heurte alternativement l'une des butées. Le vérin heurte directement la butée d'aplomb sur laquelle il s'appuie pour donner la position de travail. Dans ce cas, la butée s'étend du même côté de l'axe longitudinal que la tige du vérin. Ce choc est provoqué par le balourd de la charrue et par la pression dans le vérin de retournement. La pression dans le vérin est celle de la centrale hydraulique du tracteur qui est de l'ordre de 200 bars. Sous l'effet des chocs répétés, la structure d'attelage est déformée. Cette déformation peut aller jusqu'à la rupture des butées.

Sur d'autres charrues, le vérin heurte la butée d'aplomb qui s'étend de l'autre côté de l'axe longitudinal en fin de retournement. Avec une telle disposition, les efforts au niveau de la butée sont réduits mais c'est l'articulation cylindrique qui est bien plus sollicitée. La structure d'attelage de cette charrue subit donc aussi d'importantes déformations.

Pour d'autres charrues, le système de butées à vis est remplacé par un vérin à mémoire. Avec ce type de butée hydraulique, l'inclinaison de la charrue peut être modifiée pendant le labour. Par contre, seul un réglage symétrique du vérin à mémoire est possible. C'est-à-dire qu'un réglage d'aplomb différent entre le travail à gauche et le travail à droite n'est pas possible. Par ailleurs, le coût d'un vérin à mémoire est bien plus élevé qu'une butée mécanique.

La présente invention a pour but de remédier aux inconvénients précités et de proposer une charrue avec une structure d'attelage plus légère et donc moins coûteuse.

A cet effet, une importante caractéristique de l'invention consiste en ce que la charrue présente un dispositif pour réduire la pression dans ledit organe de manoeuvre sans limiter la pression entre ladite centrale hydraulique et ledit dispositif. Ledit dispositif de réduction de pression permet d'obtenir à sa sortie une valeur réglée, réduite et constante. Grâce audit dispositif, les chocs sur la structure d'attelage sont bien moins violents puisque la pression régnant dans l'organe de manoeuvre est réduite. La pression maximale est égale à la pression de tarage du dispositif. La pression de tarage est bien inférieure aux 200 bars de la centrale hydraulique. La pression de tarage ne perturbe pas le repliage/dépliage de la charrue le cas échéant.

D'autres objets et caractéristiques de l'invention ressortiront de la description ci-après avec références aux dessins et schémas annexés qui représentent à titre d'exemples non limitatifs, quelques formes de réalisation du dispositif selon l'invention.

Sur ces dessins et schémas :
- la figure 1 représente une vue arrière d'une charrue selon l'invention placée dans une position de travail ;
- la figure 2 représente schématiquement le circuit d'alimentation d'un organe de manoeuvre juste avant la fin du mouvement de retournement ;
- la figure 3 représente schématiquement un autre exemple pour l'alimentation d'un organe de manoeuvre en fin de retournement.

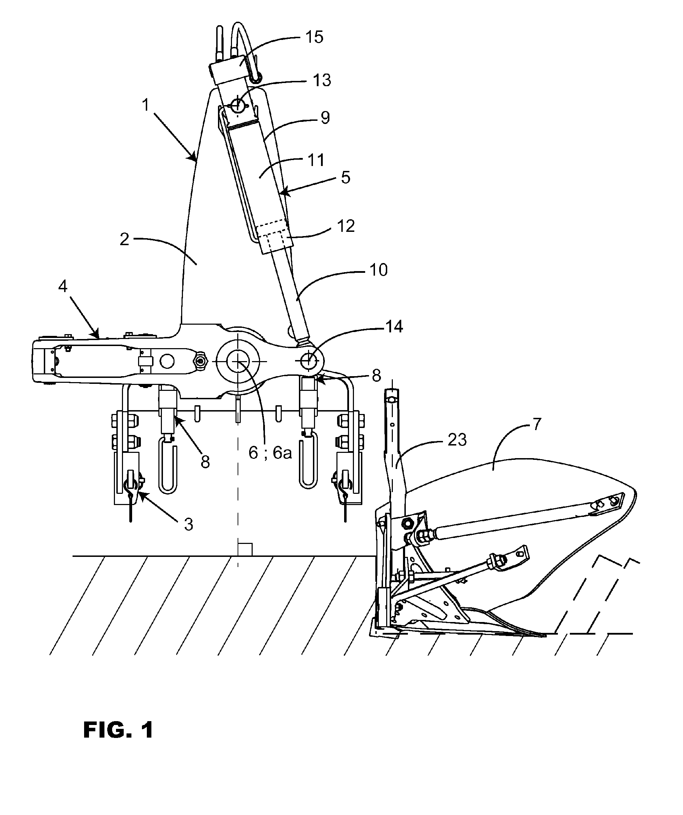

La figure 1 représente la partie avant d'une charrue réversible. Cette charrue réversible (1) comporte dans les grandes lignes une structure d'attelage (2) liée à un système d'attelage (3) en trois points d'un tracteur (non représenté), une structure porteuse (4), un organe de manoeuvre (5) et un circuit permettant de commander l'organe de manoeuvre (5). Le circuit est alimenté par une centrale hydraulique (16). La structure porteuse (4) comporte une partie avant liée à la structure d'attelage (2) au moyen d'une articulation cylindrique (6) d'axe longitudinal (6a) sensiblement horizontal et dirigé suivant la direction d'avance (A) et une partie arrière supportant des corps de labour (7). Pour une meilleure compréhension, les corps de labour supérieurs et la poutre avec les ages portant les corps n'ont pas été représentés sur la figure 1. Seuls les corps de labour avec leur étançons (23) qui sont en train de retourner la terre sont représentés selon une vue de l'arrière. Dans la suite de la description, on appellera ce pivotement d'environ 180° de la structure porteuse (4) le retournement, lequel est composé d'un premier quart de tour et d'un deuxième quart de tour. Afin de limiter les positions de travail de la charrue (1), la structure d'attelage (2) est munie de butées d'aplomb (8). Ces butées d'aplomb (8) sont réalisées de préférence sous forme de vis réglables lorsqu'il s'agit de butée mécanique ou par un vérin à mémoire lorsqu'il s'agit de butée hydraulique.

Pour le retournement, la structure porteuse (4) pivote d'environ 180° autour de l'axe longitudinal (6a) via l'organe de manoeuvre (5). Cet organe de manoeuvre (5) est constitué d'un vérin hydraulique du type à double effet avec un cylindre (9) et une tige de piston (10). Il comporte une grande chambre (11) et une petite chambre (12). Le vérin est d'une part lié à la structure d'attelage (2) au moyen d'une articulation supérieure (13) et d'autre part à la structure porteuse (4) au moyen d'une articulation inférieure (14). Les articulations (13, 14) présentent chacune un axe sensiblement horizontal et sensiblement parallèle à la direction d'avance (A). L'articulation supérieure (13) est située au-dessus de l'articulation cylindrique (6) et son axe est sensiblement parallèle à l'axe longitudinal (6a) de ladite articulation cylindrique (6). La structure porteuse (4) présente dans sa partie avant un support d'entraînement sur lequel est accroché la tige (10) du vérin au moyen de l'articulation inférieure (14).

L'articulation inférieure (14) est amenée à être déplacée soit à gauche ou soit à droite de l'axe longitudinal (6a) de ladite articulation cylindrique (6) en fonction de la position de travail. Le vérin permet de pivoter la structure porteuse (4) d'environ 180°, soit un demi-tour. Plus précisément, lorsque le vérin raccourcit, la structure porteuse (4) pivote autour de l'axe longitudinal (6a) d'environ 90° soit, un quart de tour, et ensuite, ledit vérin se rallonge pour faire pivoter ladite structure porteuse (4) d'environ 90° supplémentaires.

La charrue (1) comporte également un bloc hydraulique (15) permettant de commander notamment l'organe de manoeuvre (5) pour réaliser le retournement. Le bloc hydraulique (15) est destiné à être branché sur une centrale hydraulique (16) qui impose la pression à l'huile dans le circuit. Dans le cas présent, c'est le tracteur qui fait office de centrale hydraulique (16) en étant attelée à la charrue (1). Le tracteur est équipé d'au moins un distributeur (17) à quatre orifices et trois positions. Deux des orifices sont reliés à la source hydraulique et les deux autres sont reliés au réservoir. Ce distributeur (17) est commandé manuellement depuis le tracteur par un levier. Pour toute l'opération de retournement, l'organe de manoeuvre (5) est alimenté par la centrale hydraulique (16), et notamment la pompe du tracteur.

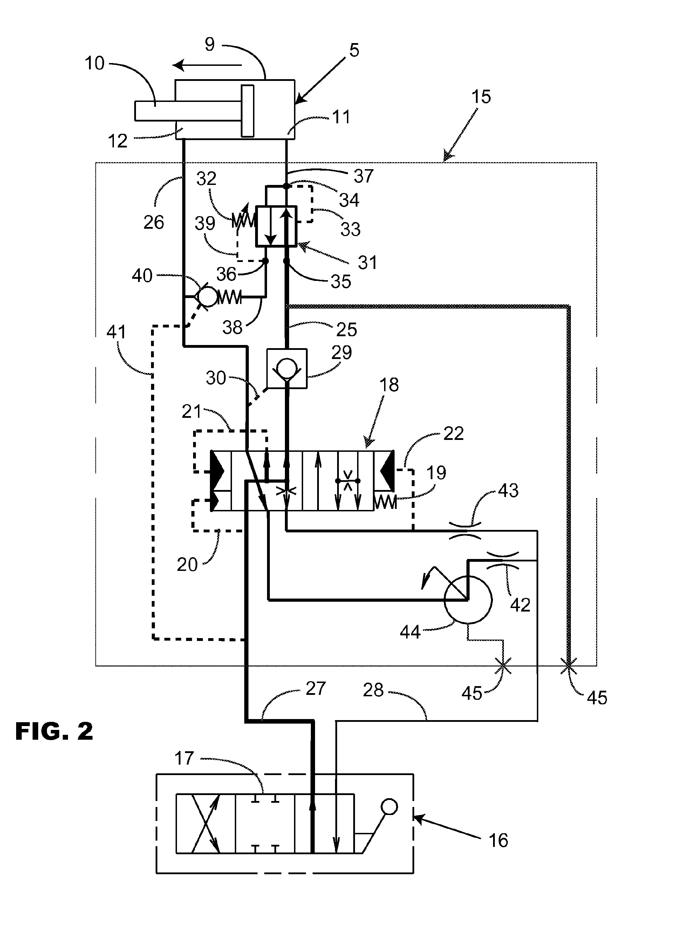

La figure 2 représente schématiquement le circuit hydraulique du bloc hydraulique (15) permettant de commander une charrue réversible sans largeur de travail variable. La figure 2 montre le circuit d'alimentation en fluide de la grande chambre (11) du vérin pour le retournement, deuxième quart de tour. Le bloc hydraulique (15) comporte un circuit avec un distributeur (18) à tiroirs pouvant occuper deux positions et possédant six orifices. Le distributeur (18) comporte un élément de rappel (19) et des conduites de commande (20, 21, 22) qui sont destinés à le commander. Cet élément de rappel (19) maintient ou rappelle le distributeur (18) dans sa position initiale (la position initiale n'est pas représentée).

La première conduite de commande (20) communique avec une petite surface de pilotage destinée à agir dans le sens contraire de l'élément de rappel (19) de manière à amener le distributeur (18) dans son autre position. La deuxième conduite de commande (21) communique avec une grande surface de pilotage destinée à agir dans le sens contraire de l'élément de rappel (19) de manière à amener le distributeur (18) dans son autre position. La troisième conduite de commande (22) communique avec une grande surface de pilotage destinée à agir dans le même sens que l'élément de rappel (19) de manière à amener le distributeur (18) dans son autre position. Les deux grandes surfaces de pilotage sont avantageusement de même dimension. Pour assurer la mise en place dans l'une ou l'autre position, il faut que la loi d'équilibre du distributeur (18) soit rompue. Cette loi d'équilibre est fonction des efforts qui s'appliquent de part et d'autre du distributeur (18). Ces efforts dépendent directement des pressions qui règnent dans les différentes conduites de commande (20, 21, 22) et de la dimension des surfaces de pilotage.

Le distributeur (18) comporte six orifices, dont chacun reçoit une conduite qui amène le fluide. Le distributeur (18) communique ainsi avec le vérin au moyen d'une première et d'une deuxième conduites (25, 26) et avec la centrale hydraulique (16) au moyen d'une troisième et d'une quatrième conduites (27, 28). La grande chambre (11) du vérin est reliée à la première conduite (25) et la petite chambre (12) est reliée à la deuxième conduite (26). La première conduite de commande (20) communique avec la troisième conduite (27) et la troisième conduite de commande (22) communique avec la quatrième conduite (28).

Il est prévu un clapet anti-retour (29) situé sur la première conduite (25) entre la grande chambre (11) du vérin et un des orifices du distributeur (18). Ce clapet anti-retour (29) est commandé par la pression qui règne dans la deuxième conduite (26) au moyen d'une conduite de commande supplémentaire (30). Il est destiné à autoriser, lorsqu'il n'est pas commandé, uniquement le passage du fluide en provenance du distributeur (18) vers la grande chambre (11). Lorsqu'il est commandé, il autorise le passage du fluide dans les deux sens. Ce clapet anti-retour (29) permet notamment d'assurer la position statique du vérin lors du travail (lorsque aucune chambre (11, 12) n'est alimentée). Ainsi le clapet anti-retour (29) interdit au vérin de retournement de se raccourcir.

Sur la figure 2, on remarque que le fluide en provenance de la centrale hydraulique (16) correspond à la pression d'alimentation. Cette pression d'alimentation de l'ordre de 200 bars s'applique donc sur la petite et la grande surfaces de pilotage (20, 21) qui maintient le distributeur (18) dans son autre position (telle que représentée). Lorsque le fluide en provenance de la centrale hydraulique (16) pénètre dans la grande chambre (11), le vérin de retournement s'allonge ce qui permet de pivoter la structure porteuse (4) d'un quart de tour supplémentaire autour de l'axe longitudinal (6a). La structure porteuse (4) aura donc effectué un demi-tour soit 180°. Par ailleurs, le fluide contenu dans la petite chambre (12) est chassé et s'échappe par la deuxième conduite (26), par le distributeur (18) qui autorise le passage dudit fluide vers la quatrième conduite (28) pour finir dans la centrale hydraulique (16). A ce fluide, en provenance de la petite chambre (12) du vérin, correspond une pression de retour et un débit de retour.

Selon une caractéristique importante de l'invention, la charrue (1) présente un dispositif (31) pour réduire la pression dans ledit organe de manoeuvre (5) sans limiter la pression entre ladite centrale hydraulique (16) et ledit dispositif (31). Ce dispositif (31) est implanté sur la première conduite (25) qui alimente la grande chambre (11). Le dispositif (31) est intercalé entre le clapet anti-retour (29) et la grande chambre (11) de l'organe de manoeuvre (5). Ce dispositif (31) permet d'obtenir à sa sortie une valeur réglée, réduite et constante de pression. La pression de sortie est déterminée par le tarage d'un ressort réglable par un système vis-écrou. Le dispositif (31) est réglable à une valeur de tarage déterminée ou quelconque. La pression de tarage du dispositif (31) est indépendante de la pression de fonctionnement de la centrale hydraulique (16) du tracteur. Le dispositif (31) est un réducteur de pression constitué d'une soupape de réduction de pression, trois voies à action directe. La soupape est du type à tiroir. Grâce à ce dispositif (31) intercalé juste devant la grande chambre (11) du vérin, il n'y a pas de perturbation lors des mouvements de retournement. Avec ce dispositif de réduction de pression (31) lorsque le vérin arrive au bout de son mouvement en fin de retournement, le vérin appui avec la pression réduite sur la butée d'aplomb correspondante. Les sollicitations sur les butées ainsi que sur la structure d'attelage sont alors bien diminuées.

Le dispositif (31) est commandé par un élément de rappel (32) et une conduite de pilotage (33). Cet élément de rappel (32) maintient le dispositif (31) dans sa position initiale. La conduite de pilotage (33) communique avec une surface de pilotage destinée à agir dans le sens contraire de l'élément de rappel (32) de manière à amener le dispositif (31) dans son autre position. Le dispositif (31) comporte trois orifices (34, 35, 36). Le premier orifice (34) communique avec une conduite d'alimentation (37), le deuxième orifice (35) communique avec la première conduite (25) et le troisième orifice (36) communique avec la conduite retour (38). Le dispositif (31) est normalement ouvert est permet un débit de passage du deuxième orifice (35). La pression en entrée du dispositif (31), au niveau du deuxième orifice (35), est imposée par la centrale hydraulique (16) alors que la pression en sortie dans la conduite d'alimentation (37) est réduite à la valeur de tarage. En présence d'une pression égale à la valeur de tarage au premier orifice (34), le tiroir se déplace pour limiter le débit en entrée du deuxième orifice (35), ce qui régule la pression au premier orifice (34) dans la conduite d'alimentation (37). Pour un bon fonctionnement, il est important que le troisième orifice (36) soit drainé, c'est-à-dire qu'il soit relié au réservoir au moyen d'un drain (39). Ainsi lorsqu'il y a des variations brusques de pression lors de mouvement de recul du vérin, le dispositif (31) permet d'évacuer cet excédent d'huile vers le réservoir par le troisième orifice (36). Cette valeur de tarage est stable et constante quelle que soit la pression ou les variations de pression dans la première conduite (25). Si la pression au premier orifice (34) est supérieure au tarage du dispositif (31), le tiroir continue sa course pour restituer la pression excédentaire au travers du troisième orifice (36) vers le réservoir. Ainsi, la structure d'attelage (2) est protégée contre les variations de pression excessives. La pression maximale pouvant régner dans la grande chambre (11) du vérin est égale à la pression de tarage réglée sur le dispositif (31).

A la lumière de la figure 2, on remarque que le dispositif (31) de réduction de pression est combiné avec un clapet anti-retour taré avec ressort (40). Ce clapet anti-retour taré avec ressort (40) est prévu entre le dispositif (31) et la deuxième conduite (26) pour le retour du fluide vers le réservoir. Il est commandé par la pression qui règne dans la troisième conduite (27) au moyen d'une conduite de commande supplémentaire (41). Lorsque le clapet (40) est piloté, il autorise à l'excédent d'huile de retourner vers le réservoir via la conduite retour (38) qui est reliée à la troisième conduite (27). Sur la quatrième conduite (28) est implanté un étranglement (42) qui a pour fonction de limiter le débit de fluide en provenance de la petite chambre (12) du vérin. L'autre étranglement (43) limite le débit de fluide en provenance de la grande chambre (11) lorsque le vérin se raccourcit.

D'une manière avantageuse, le dispositif (31) de réduction de pression est intégré dans le bloc de commande de l'organe de manoeuvre (5).

A la lumière de la figure 2, on voit que le bloc hydraulique (15) pour le retournement peut être combiné à un bloc de repliage/dépliage, lorsque la charrue réversible est à largeurs multiples ou variables. La charrue présente alors un vérin de repliage/dépliage et au moins une bielle permettant de rapprocher la structure porteuse (4) de l'axe longitudinal (6a). Les deux blocs commandent alors de manière successive l'alimentation des chambres de vérins pour d'abord rapprocher la structure porteuse (4), puis effectuer le retournement et enfin le dépliage pour travailler la bande de terre souhaitée. Dans ce cas, le dispositif de sélection (44) et les bouchons (45) obturant les conduites respectives ont leur intérêt. Dans l'exemple de réalisation de la figure 2, on voit que le dispositif (31) est implanté dans le bloc hydraulique (15). Dans le cas d'un bloc de retournement et de repliage/dépliage, les vérins sont pilotés par les différents seuils de pression qui déplacent les tiroirs internes des blocs. L'insertion d'un dispositif (31) en amont ne perturbe pas la pression et donc le fonctionnement du retournement. Ainsi, le fonctionnement du vérin de repliage/dépliage monté en parallèle n'est pas perturbé par cette réduction de pression vers la grande chambre (11) de l'organe de manoeuvre (5).

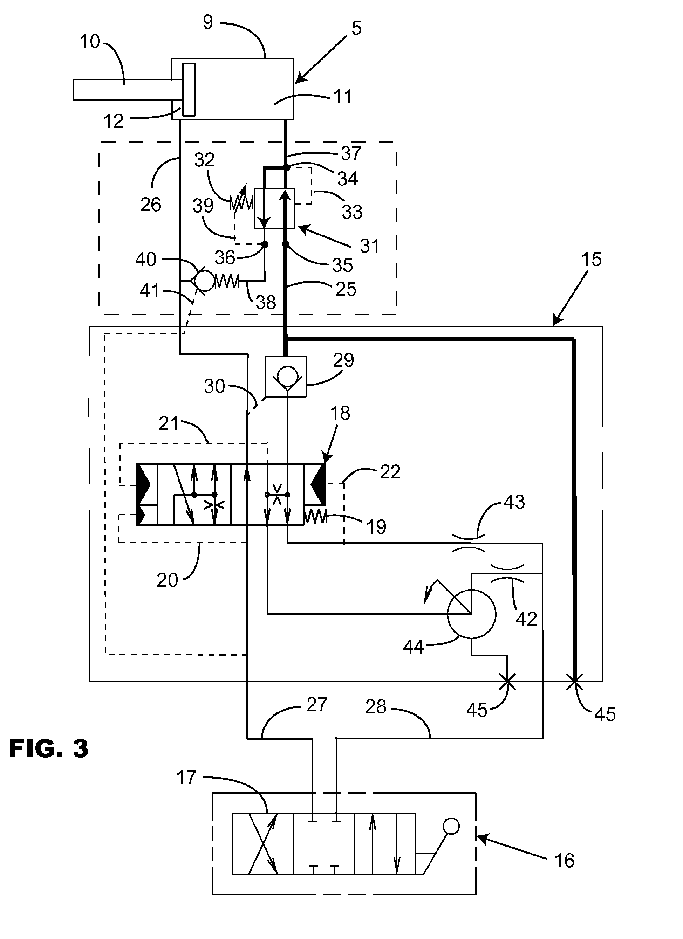

La figure 3 représente schématiquement le vérin en fin de mouvement à la fin du retournement, lorsque la tige (10) arrive en contact avec l'une des butées d'aplomb (8). On remarque également que le dispositif (31) selon l'invention n'est pas intégré dans le bloc hydraulique (15). Il est tout à fait possible d'utiliser ce dispositif (31) de réduction de pression sous forme de composant additionnel pouvant être adapté sur les charrues existantes.

Lorsque la charrue (1) retourne la terre, le distributeur (17) est dans sa position de repos, c'est-à-dire qu'il n'y a pas de circulation d'huile dans le bloc hydraulique (15). Le clapet (40), n'étant pas piloté, empêche que l'excédent de pression dans la grande chambre (11) puisse s'échapper de la conduite retour (38) vers la deuxième conduite (26). Ceci permet notamment à la charrue (1) de garder l'aplomb lors du travail. La pression dans la grande chambre (11) de l'organe de manoeuvre (5) pouvant dépasser la pression de tarage du dispositif (31).

La machine agricole de la figure 1 est une charrue du type portée. Elle est destinée à être montée sur l'attelage trois points d'un tracteur.

Dans un autre exemple de réalisation, le dispositif (31) pour réduire la pression dans l'organe de manoeuvre (5) peut aussi s'appliquer à une charrue semi-portée. Cet organe de manoeuvre est alors composé par deux vérins de retournement.

Diverses modifications peuvent être apportées aux exemples qui viennent d'être décrits, notamment en ce qui concerne la constitution des divers éléments ou par substitution d'équivalents techniques ou encore l'agencement des différentes conduites sans pour autant sortir du domaine de protection défini par les revendications.

## Revendications

1. Charrue (1) réversible comportant une structure d'attelage (2), une structure porteuse (4) et un organe de manoeuvre (5) permettant de déplacer ladite structure porteuse (4) par rapport à ladite structure d'attelage (2) autour d'une articulation cylindrique (6) de manière à amener ladite charrue (1) d'une position de travail dans une autre position de travail, chacune des positions de travail étant limitée par une butée d'aplomb (8) respective, l'organe de manoeuvre (5) étant alimenté par une centrale hydraulique (16), ***caractérisée en ce* qu'**elle présente un dispositif (31) pour réduire la pression dans ledit organe de manoeuvre (5) sans limiter la pression entre ladite centrale hydraulique (16) et ledit dispositif (31).

2. Charrue selon la revendication 1, ***caractérisée en ce* que** ledit organe de manoeuvre (5) est un vérin présentant une grande chambre (11) et que ledit dispositif (31) est implanté sur la première conduite (25) alimentant la grande chambre (11) dudit organe de manoeuvre (5).

3. Charrue selon la revendication 1 ou 2, ***caractérisée en ce* que** ledit dispositif (31) est combiné à un clapet anti-retour taré avec ressort (40).

4. Charrue selon l'une quelconque des revendications 1 à 3, ***caractérisée en ce* que** ledit dispositif (31) présente trois orifices (34, 35, 36), ledit dispositif (31) est réglable à une valeur de tarage prédéterminée ou quelconque.

5. Charrue selon la revendication 4, ***caractérisée en ce* que** ledit dispositif (31) est normalement ouvert est permet un débit de passage dudit deuxième orifice (35).

6. Charrue selon la revendication 4 ou 5, ***caractérisée en ce* qu'**en présence d'une pression égale à la valeur de tarage audit premier orifice (34), ledit dispositif (31) limite le débit en entrée dudit deuxième orifice (35) et régule la pression audit premier orifice (34).

7. Charrue selon l'une quelconque des revendications 4 à 6, ***caractérisée en ce* que** ledit troisième orifice (36) est toujours drainé.

8. Charrue selon la revendication 4 ou 5, ***caractérisée en ce* que** si la pression audit premier orifice (34) est supérieure à la valeur de tarage, ledit dispositif (31) permet de restituer la pression excédentaire au travers dudit troisième orifice (36).

9. Charrue selon l'une quelconque des revendications 1 à 8, ***caractérisée en ce* que** ledit dispositif (31) est un réducteur de pression constitué d'une soupape de réduction de pression.

10. Charrue selon l'une quelconque des revendications 1 à 9, ***caractérisée en ce* que** ledit dispositif (31) est intégré dans un bloc hydraulique (15) de l'organe de manoeuvre (5).
